# EUROPÄISCHE PATENTSCHRIFT

(11) **EP 2 332 847 B1**
(45) Veröffentlichungstag und Bekanntmachung des Hinweises auf die Patenterteilung: **17.02.2016**
(21) Anmeldenummer: 10194285.2
(22) Anmeldetag: 09.12.2010
(51) Int. Cl.: B65C 9/40, B67B 3/26, B67C 3/00, B29C 49/42, B29C 49/78

(54) **Vorrichtung zum Behandeln von Behältnissen mit kombinierter Formatteil- und Einbauerfassung**
Device for handling containers with combined format section and installation monitoring
Dispositif de traitement de récipients à l'aide d'un établissement d'éléments de format et d'encastrement combiné

(30) Priorität: 14.12.2009 DE 102009058087
(43) Veröffentlichungstag der Anmeldung: 15.06.2011
(73) Patentinhaber: Krones AG, 93073 Neutraubling (DE)
(72) Erfinder: Ziegler, Manfred, 94034, Passau (DE)
(74) Vertreter: Bittner, Bernhard

(56) Entgegenhaltungen:
- WO-A1-03/025833
- WO-A1-2005/068301
- WO-A1-2008/145345
- DE-A1- 19 941 485
- US-A1- 2005 194 705

## Beschreibung

Die vorliegende Erfindung bezieht sich auf eine Vorrichtung zum Behandeln von Getränkebehältnissen. Derartige Vorrichtungen sind aus dem Stand der Technik seit langem bekannt. Im Einzelnen ist es bekannt, dass solche Getränkebehältnisse in einer Vielzahl von einzelnen Verfahrensschritten hergestellt werden. So ist es in jüngerer Zeit üblich geworden, Kunststoffvorformlinge durch Blasumformung zu Kunststoffbehältnissen umzuformen. Anschließend können diese Behältnisse befüllt, verschlossen und mit einem Etikett versehen werden. In weiteren Verfahrensschritten folgen dann Schritte wie das Zusammenfassen mehrerer Behältnisse zu Gebinden oder auch die Palettierung derartiger Gebinde.

Aus der WO 2005/068301 A1 ist eine Vorrichtung zum Bewegen und Etikettieren von Behältern bekannt. Dabei sind mehrere Etikettieraggregate vorgesehen, die über Verbindungsleitungen mit einer zentralen Steuereinrichtung verbunden sind.

Die WO 2008/145345 A1 beschreibt eine Vorrichtung gemäß dem Oberbegriff des Anspruchs 1 und ein Formatteil gemäß dem Oberbegriff des Anspruchs 10. Dabei sind Identifikationselemente in Form von RFID-Transpondern vorgesehen.

Dabei werden bei derartigen Maschinen oftmals Formatteile eingesetzt, die eingewechselt werden können, um beispielsweise unterschiedliche Behältnistypen zu behandeln. Auch können derartige Formatteile im Falle eines Verschleißes ersetzt werden. Bei einem derartigen Ersatz von Formatteilen ist auf viele Gegebenheiten zu achten. So ist sicherzustellen, dass ein Formatteil eingesetzt wird, welches auf die Vorrichtung selbst angepasst ist. Weiterhin ist jedoch auch sicherzustellen, dass das Formatteil ordnungsgemäß an der Vorrichtung angeordnet und beispielsweise auch ordnungsgemäß an der Vorrichtung verriegelt ist.

In der Praxis hat sich jedoch gezeigt, dass schon die Verriegelung teilweise nicht ordnungsgemäß überprüft wurde, was zur Zerstörung der Anlagen führen kann. So wurde beispielsweise wiederholt bei einem Flaschensortenwechsel und dem damit verbundenen Austausch der Rüst- und Garniturenteile die Verriegelung nicht eingelegt, was zu losen Führungsteilen führte; die in den beginnenden Flaschenstrom beschädigt werden.

Der vorliegenden Erfindung liegt daher die Aufgabe zu Grunde, die Sicherheit derartiger Anlagen und insbesondere auch die Sicherheit in Bezug auf korrekten Einbau zu erhöhen. Daneben soll eine möglichst unkomplizierte Methode geschaffen werden, die dem Benutzer eine Überprüfung des ordentlichen Arbeitsbetriebs der Maschine ermöglicht.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche. Eine erfindungsgemäße Vorrichtung zum Behandeln von Getränkebehältnissen weist eine Transporteinrichtung auf, welche die Behältnisse entlang eines vorgegebenen Transportpfades transportiert. Weiterhin weist die Vorrichtung ein Formatteil auf, welches an der Vorrichtung auswechselbar angeordnet ist, wobei das Formatteil ein auf RFID-Technologie basierendes Identifikationselement zum Identifizieren des Formatteils aufweist.

Erfindungsgemäß weist das Formatteil weiterhin eine Positionserfassungseinrichtung auf, welche die örtliche Position wenigstens eines Elements der Vorrichtung gegenüber dem Formatteil erfasst und ein für diese Position charakteristisches Signal ausgibt. Es wird daher vorgeschlagen, dass die betreffenden Formatteile nicht nur mit einem Identifikationselement wie beispielsweise einem RFID-Tag ausgestattet werden, sondern auch mit einer Einrichtung, welche eine Position eines Teils der Vorrichtung wie beispielsweise eines Verschließelementes gegenüber dem Formatteil erfasst. Damit kann auf schnelle und unkomplizierte Weise überprüft werden, ob nicht nur das korrekte Formatteil an der Vorrichtung angeordnet ist, sondern auch, ob dieses korrekt an der Vorrichtung verriegelt ist. Vorteilhaft dient das Formatteil (auch) zum Transportieren der Behältnisse.

Vorteilhaft ist in dem Formatteil eine Identifikation abgelegt, welche dieses Formatteil eindeutig identifiziert. Dabei kann es sich beispielsweise um eine ID-Nummer oder dergleichen handeln. Vorteilhaft ist das Formatteil an dem Transport der Behältnisser beteiligt bzw. das Formatteil ist ein Element der Transporteinrichtung, welche die Behältnisse transportiert.

Bei einer bevorzugten Vorrichtung weist diese auch eine Abfrageeinrichtung auf, um die in dem ersten Identifikationselement abgelegte Information abzufragen. Dabei kann es sich beispielsweise um einen RFID-Sender handeln, der die in dem RFID-Tag des Formatteils abgelegte Information abfragt und beispielsweise mit eigenen gespeicherten Daten abgleicht um so festzustellen, ob das Formatteil zu der jeweiligen Anlage passt.

Vorteilhaft weist die Abfrageeinrichtung oder die Vorrichtung eine (beispielsweise induktiv arbeitende) Energieversorgungseinrichtung auf, um das erste Identifikationselement zumindest zeitweise drahtlos mit Energie zu versorgen. Auf diese Weise wird in besonders vorteilhafter Weise die RFID-Technologie genutzt, wobei der Vorteil hierin besteht, dass das Identifikationselement selbst keine eigene Stromquelle haben muss, sondern über die Ferne von der Abfrageeinrichtung versorgt wird.

In Beantwortung einer derartigen Energieversorgung kann das Identifikationselement Signale ausgeben, welche einerseits das Identifikationselement eindeutig identifizieren und welche bevorzugt andererseits auch Informationen darüber geben, ob eine ordnungsgemäße Verriegelung des Formatteils an der Vorrichtung gegeben ist. Diese Information kann widerum von der Positionserfassungseinrichtung stammen. Bevorzugt wird daher auch die Positionserfassungseinrichtung von der Energieversorgungseinrichtung mit Energie versorgt.

Bei einer weiteren bevorzugten Ausführungsform weist die Vorrichtung eine Befestigungseinrichtung auf, um das Formatteil an der Vorrichtung zu befestigen und das Element der Vorrichtung ist ein Verriegelungselement dieser Befestigungseinrichtung. Damit erfasst die Positionserfassungseinrichtung eine Position des besagten Verriegelungselements. Diese Erfassung kann dabei in unterschiedlicher Weise erfolgen. Vorteilhaft weist die Positionserfassungseinrichtung einen induktiven Näherungsinitiator auf, der damit berührungslos die Position des besagten Elementes wie des Verriegelungselements erfasst.

Vorteilhaft ist das Identifikationselement untrennbar mit der Positionserfassungseinrichtung verbunden. Unter untrennbar wird dabei verstanden, dass diese beiden Einrichtungen nicht voneinander getrennt werden können, ohne dass damit eine Substanzbeeinträchtigung oder Zerstörung wenigstens eines der beiden Elemente einhergeht.

Damit wird hier vorgeschlagen, dass die Positionserfassungseinrichtung wie ein insbesondere induktiver Näherungsinitiator in Verbindung gebracht wird mit dem Identifikationselement, welches insbesondere auf RFID-Technologie basiert. Vorteilhaft sind diese beiden Elemente auf einem gemeinsamen Träger (Tag) angeordnet. Es wird daher bevorzugt ein RFID-INI-Sensor verwendet.

Vorteilhaft weist das erste Identifikationselement eine Sende-Einrichtung zur drahtlosen Ausgabe von Signalen auf. Bei diesen Signalen handelt es sich dabei, wie oben erwähnt, insbesondere um Signale, die das Formatteil eindeutig identifizieren und die darüber hinaus vorteilhaft über die Position eines Verriegelungselements Auskunft geben.

Bei einer weiteren vorteilhaften Ausführungsform sind das Identifikationselement und die Positionserfassungseinrichtung untrennbar an dem Formatteil angeordnet. Hiermit wird insbesondere verstanden, dass keines dieser beiden Elemente ohne Substanzbeeinträchtigung oder Zerstörung dieses oder des jeweils anderen Teils von dem Formatteil entfernt werden kann. Auf diese Weise kann einer versehentlichen Trennung der Identifikations- und Positionserkennungsfunktion von dem Formatteil entgegengewirkt werden.

Bei einer weiteren vorteilhaften Ausführungsform ist die Positionserfassungseinrichtung derart gestaltet, dass sie einen Verriegelungszustand des Formatteils gegenüber der Vorrichtung bestimmt. Bei einem Formatteil kann es sich beispielsweise um eine Blasform handeln, um eine Führungsschiene für Behältnisse oder Kunststoffvorformlinge oder dergleichen.

Vorteilhaft ist an dem Formatteil ein insbesondere auf RFID - Technologie basierendes zweites Identifikationselement vorgesehen. Dieses zweite Identifikationselement kann vorteilhaft ebenfalls Identifikationssignale an die Abfrageeinrichtung ausgeben. So ist es möglich, dass ein Formatteil nur dann als korrekt akzeptiert wird, wenn beide Identifikationselemente verifiziert wurden. Auf diese Weise kann ein versehentliches einsetzen falscher Formatteile besser vermieden werden. Vorzugsweise geben das erste Identifikationselement und das zweite Identifikationselement ihre Signale unabhängig voneinander aus.

Vorzugsweise ist dieses zweite Identifikationselement ebenfalls untrennbar mit dem Formatteil verbunden also insbesondere derart, dass es nicht von dem Formatteil gelöst werden kann, ohne dass hierdurch eine Zerstörung des Identifikationselements und/oder des Formatteils auftritt. Auch wäre es möglich, dass auch an der Vorrichtung ein Identifikationselement vorgesehen ist, welches ebenfalls vorteilhaft an die Abfrageeinrichtung Signale ausgibt. Auf diese Weise kann sichergestellt werden, dass ein bestimmtes Formatteil auch an einem dafür vorgesehenen Ort der Anlage eingebaut wird.

Bevorzugt ist das zweite Identifikationselement derart gestaltet, dass es dieses zweite Identifikationselement eindeutig identifizierende Signale ausgibt. Vorteilhaft sind diese Signale nicht änderbar. Dabei ist es auch möglich, dass diese Signale eine bestimmte Gruppe von Formatteilen identifizieren.

Vorteilhaft weist die Abfrageeinrichtung oder die Vorrichtung eine Speichereinrichtung zum Speichern von das Identifikationselement identifizierenden Signalen oder daraus abgeleiteten Daten auf. Daneben ist vorteilhaft noch eine Vergleichseinrichtung vorgesehen, welche empfangene Identifikationssignale mit gespeicherten Daten abgleicht.

Die vorliegende Erfindung ist weiterhin auf ein Formatteil für eine Vorrichtung zum Behandeln von Getränkebehältnissen und zur trennbaren Anbringung an einer Vorrichtung der oben beschriebenen Art gerichtet, wobei das Formatteil einen auf RFID-Technologie basierendes erstes Identifikationselement zum Identifizieren des Formatteils aufweist und wobei das Identifikationselement eine Sendeeinrichtung zum drahtlosen Senden einer des Identifikationselement eindeutig identifizierenden Informationen aufweist. Erfindungsgemäß weist das Formatteil weiterhin eine Positionserfassungseinrichtung auf, welche eine örtliche Position wenigstens eines Elementes der Vorrichtung gegenüber dem Formatteil erfasst. Weiterhin ist das Formatteil derart ausgestattet, dass es auch ein für diese Position charakteristisches Signal ausgibt.

Vorteilhaft sind das Identifikationselement und die Positionserfassungseinrichtung auf einem gemeinsamen Träger angeordnet und insbesondere untrennbar miteinander verbunden.

Weitere Vorteile und Ausführungsformen ergeben sich aus den beigefügten Zeichnungen. Darin zeigen:
- Fig. 1: Eine schematische Darstellung eines Formatteils einer erfindungsgemäßen Vorrichtung;
- Fig. 2: eine Draufsicht auf das Formatteil aus Fig. 1;
- Fig. 3: eine Seitensicht des Formatteils aus Fig. 1;
- Fig. 4: eine Teildarstellung des Formattteils aus Fig. 1;
- Fig. 5: eine blockschaltbildartige Darstellung eines Identifikationselements mit Positionserfassungseinrichtung.

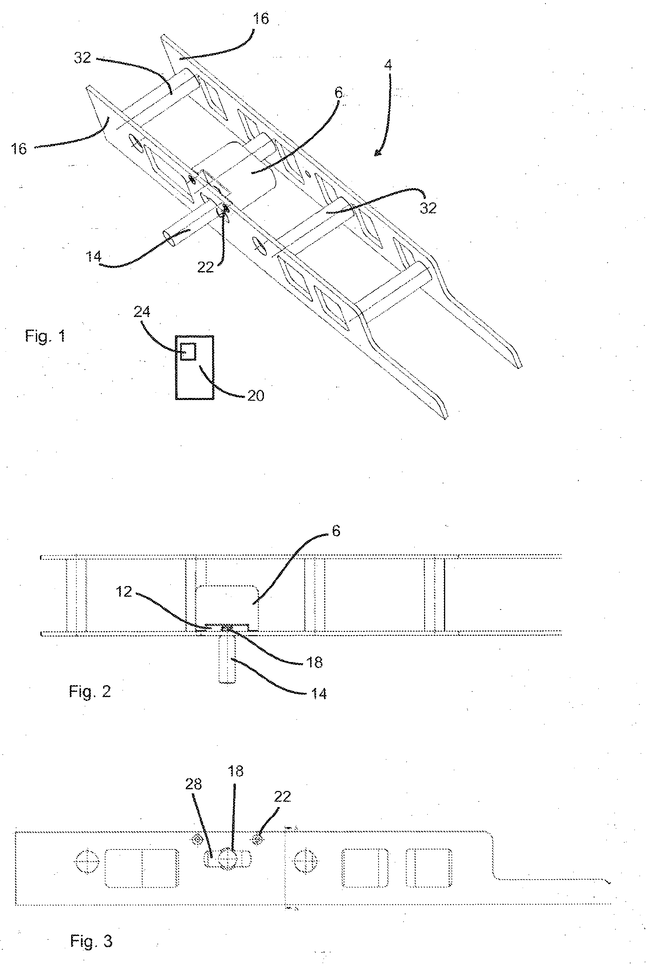

Fig. 1 zeigt ein Formatteil 4, welches an einer Vorrichtung zum Behandeln von Getränkebehältnissen (nicht gezeigt) angeordnet sein kann. Dabei handelt es sich hier bei diesem Formatteil 4 um ein Schienenelement. Dieses Formatteil 4 kann von der Vorrichtung entfernt bzw. ausgewechselt werden.

Dabei bezieht sich das Bezugszeichen 14 auf einen Träger der Vorrichtung, an dem das Formatteil 4 angeordnet wird. Das Formatteil weist hier zwei Schienenelemente 16 auf, die miteinander über Verbindungsstege 32 verbunden sind.

Das Bezugszeichen 6 kennzeichnet in seiner Gesamtheit ein Identifikationselement, welches hier über Schraubelemente 22 an dem Formatteil 4 angeordnet ist. Dieses Identifikationselement weist eine Speichereinrichtung auf, in der eine Kennung abgelegt ist, mit der dieses Identifikationselement und damit auch das Formatteil 4 eindeutig identifiziert werden kann. Es wäre jedoch auch möglich, das Identifikationselement fest bzw. untrennbar an dem Formatteil anzuordnen, d. h. derart, dass es nicht von dem Formatteil 4 getrennt werden kann, ohne dass es beschädigt bzw. zerstört wird. Daneben ist eine hier nicht dargestellte Positionserfassungseinrichtung vorgesehen, welche eine Position des Trägers 14 bzw. eines Bestandteils des Trägers 14 gegenüber dem Formatteil erfasst.

Das Bezugszeichen 20 bezeichnet eine Abfrageeinrichtung, mit der das Identifikationselement 6 ausgelesen werden kann. Dabei kann es sich beispielsweise um eine tragbare Abfrageeinrichtung handeln, welche das Identifikationselement, welches bevorzugt als RFID-Tag ausgebildet ist, abfragen kann. Zu diesem Zweck regt die Abfrageeinrichtung das Identifikationselement an, und dieses gibt wiederum eine Kennung aus, damit das Identifikationselement 6 und damit auch das Formatteil 4 identifiziert werden kann. Das Bezugszeichen 24 kennzeichnet eine (insbesondere induktiv arbeitende) Energieversorgungseinrichtung, um das Indentifikationselement drahtlos mit Energie zu versorgen.

Fig. 2 zeigt eine Draufsicht auf das Formatteil aus Fig.1. Man erkennt, dass das in seiner Gesamtheit mit 6 bezeichnete Identifikationselement in einem Bereich angeordnet ist, in dem auch der Träger 14 bzw. ein Endabschnitt 18 des Trägers 14, der hier als beweglicher Riegel ausgeführt ist, angeordnet ist. Zu diesem Zweck ist eine Ausnehmung 12 des Identifikationselements 6 vorgesehen, damit dieser Riegel 18 in unmittelbarer Nähe zu dem Identifikationselement angeordnet und gleichzeitig gegenüber diesem bewegbar ist.

Fig. 3 zeigt eine Seitenansicht des Formatteils aus Fig. 2. Man erkennt hier wieder den Endabschnitt 18, der sich hier nach oben und unten d. h. in senkrechter Richtung erstreckt. Auf diese Weise kann das Formatteil durch ein Verschwenken des Riegels in der Figurenebene an dem Träger 14 befestigt werden. Durch dieses Verschwenken wird auch die Relativposition des Riegels gegenüber dem Identifikationselement und der hier gemeinsam mit dem Identifikationselement ausgebildeten Positionserfassungseinrichtung (nicht gezeigt) verändert. Damit kann die Positionserfassungseinrichtung auch erkennen, dass sich die Position des besagten Riegels geändert hat. Vorteilhaft handelt es sich wie oben erwähnt bei der Positionserfassungseinrichtung um einen induktiven Näherungsinitiator, der auf diese Weise einen Abstand zu dem Riegel 18 erfassen kann. Damit kann ein Verriegelungszustand ermittelt werden. Das Bezugszeichen 28 bezieht sich auf eine Ausnehmung in dem Träger 16, durch welche dar Endabschnitt bzw. Riegel hindurchgeführt werden kann.

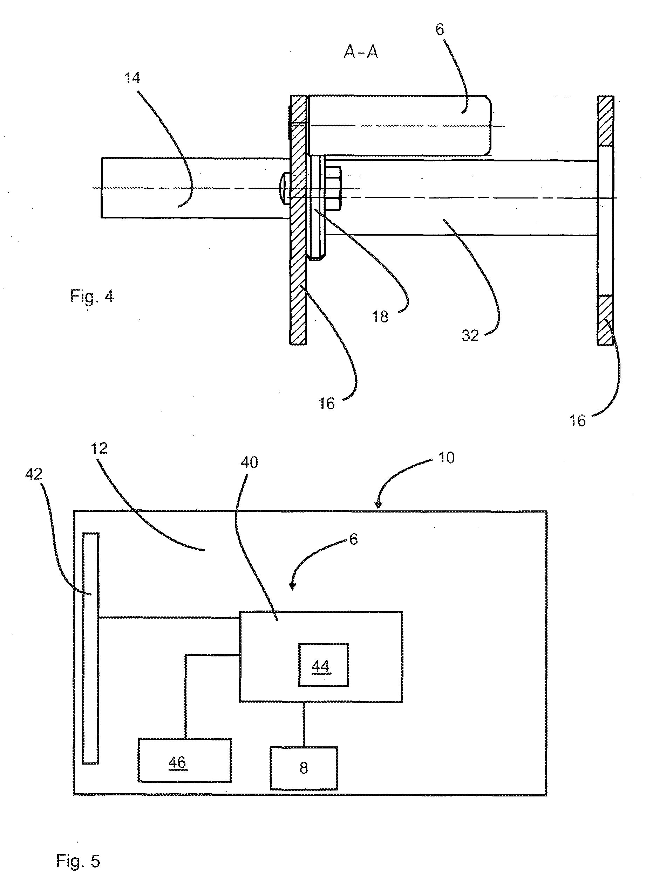

Fig. 4 zeigt eine Detaildarstellung wie in Fig. 2 gezeigten Situation. Man erkennt hier wieder den Riegel 18, der in einer Verschlussstellung in eine Ausnehmung des Identifikationselements 6 hineinragt. In dieser Situation kann das Positionserfassungselement die Position des Riegels in der Verschlussstellung erfassen und dies ebenfalls ausgeben. Das Bezugszeichen 32 kennzeichnet wiederum den Verbindungssteg, der die Seitenteile 16 miteinander verbindet.

Fig. 5 zeigt eine blockdiagrammartige Darstellung der gesamten Identifikationseinheit 10, welche sich hier sowohl aus dem Identifikationselement 6 als auch der Positionserfassungseinrichtung 8 zusammensetzt. Diese beiden Einheiten sind auf einem gemeinsamen Träger 12 angeordnet und bilden insgesamt einen sogenannten RFID-INI-Sensor.

Das Bezugszeichen 40 kennzeichnet eine Steuerungseinrichtung, welche hier sowohl Signale von der Positionserfassungseinrichtung 8 aufnimmt als auch geeignet ist, Daten zu erzeugen, welche über eine Sendeeinrichtung 46 ausgegeben werden. Das Bezugszeichen 42 kennzeichnet eine Energieaufnahmeeinrichtung wie eine Antenne, welche beispielsweise von einem induktiven Feld gespeist werden kann und auf diese Weise die Prozessoreinrichtung 40 und auch die Positionserfassungseinrichtung 8 mit Strom versorgt.

In einer Speichereinrichtung 44 ist eine Adresse gespeichert, welche das Identifikationselement 6 eindeutig identifiziert. Sobald die gesamte Einheit 16 über die Antenne 42 mit Energie versorgt wird, kann sie über die Sendeeinrichtung 46 das besagte Signal ausgeben, welches zum Identifizieren des Formatteils dient und auch ein Signal, welches für die Position des Riegels 18 charakteristisch ist.

Durch die gemeinsame Anordnung der Positionserfassungseinrichtung 8 und des Identifikationselements 6 auf dem gleichen Träger kann erreicht werden, dass diese untrennbar miteinander verbunden sind. Dabei benutzt das Identifikationselement das elektromagnetische Spektrum um Informationen berührungslos zu übertragen. Das Identifikationselement kann damit berührungslos die Informationen an die Abfrageeinrichtung 20 ausgeben.

Auch die Abfrageeinrichtung 20 weist eine elektronische Schaltung und eine Antenne auf, um das Identifikationselement 6 genauer die Kombination aus dem Identifikationselement 6 und der Positionserfassungseinrichtung 8 mit Energie zu versorgen. Im Stand der Technik werden verschiedene Frequenzbereiche für die RFID-Technologie verwendet, wie beispielsweise 125 kHz, 13,56 MHz und 2,45 GHz. Vorzugsweise wird ein Frequenzbereich von 13,56 MHz für die Informationsübertragung verwendet.

Besonders bevorzugt können beispielweise Fülleinrichtungen und Etikettiermaschinen und besonders bevorzugt derartige Maschinen, die mit sogenannten Rap-Tec-Garnituren (Behälterführungsgarnituren mit Schnellwechsel - Funktion) ausgestattet sind, mit der hier dargestellten Technologie betrieben werden.

### Bezugszeichenliste

- 4: Formatteil
- 6: Identifikationselement
- 8: Positionserfassungseinrichtung
- 10: Identifikationseinheit
- 12: Ausnehmung
- 14: Träger
- 16: Schienenelemente / Seitenteile
- 18: Riegel / Endabschnitt
- 20: Abfrageeinrichtung
- 22: Schraubelemente
- 24: Energieversorgungseinrichtung
- 28: Ausnehmung
- 32: Verbindungssteg
- 40: Steuerungseinrichtung / Prozessoreinrichtung
- 42: Energieaufnahmeeinrichtung / Antenne
- 44: Speichereinrichtung
- 46: Sendeeinrichtung

## Patentansprüche

1. Vorrichtung (1) zum Behandeln von Getränkebehältnissen, mit einer Transporteinrichtung (2), welche die Behältnisse entlang eines vorgegebenen Transportpfades transportiert, mit einem Formatteil (4), welches an der Vorrichtung (1) auswechselbar angeordnet ist, wobei das Formatteil (4) ein auf RFID - Technologie basierendes erstes Identifikationselement (6) zum Identifizieren des Formatteils (4) aufweist,
**dadurch gekennzeichnet, dass**
das Formatteil (4) weiterhin eine Positionserfassungseinrichtung (8) aufweist, welche eine örtliche Position wenigstens eines Elements (18) der Vorrichtung (1) gegenüber dem Formatteil erfasst und ein für diese Position charakteristisches Signal ausgibt.

2. Vorrichtung (1) nach Anspruch 1,
**dadurch gekennzeichnet, dass**
die Vorrichtung (1) eine Abfrageeinrichtung (20) aufweist, um in dem ersten Identifikationselement (6) abgelegte Information abzufragen.

3. Vorrichtung (1) nach Anspruch 1,
**dadurch gekennzeichnet, dass**
die Vorrichtung eine Befestigungseinrichtung (14) aufweist, um das Formatteil an der Vorrichtung zu befestigen und das Element (18) ein Verriegelungselement (18) der Befestigungseinrichtung (14) ist.

4. Vorrichtung (1) nach wenigstens einem der vorangegangenen Ansprüche,
**dadurch gekennzeichnet, dass**
das Identifikationselement (6) untrennbar mit der Positionserfassungseinrichtung (8) verbunden ist.

5. Vorrichtung (1) nach wenigstens einem der vorangegangenen Ansprüche,
**dadurch gekennzeichnet, dass**
das Identifikationselement (6) eine Sendeeinrichtung zur drahtlosen Ausgabe von Signalen aufweist.

6. Vorrichtung (1) nach wenigstens einem der vorangegangenen Ansprüche,
**dadurch gekennzeichnet, dass**
das Identifikationselement (6) und die Positionserfassungseinrichtung 8 auf einem gemeinsamen Träger (12) angeordnet sind.

7. Vorrichtung (1) nach wenigstens einem der vorangegangenen Ansprüche,
**dadurch gekennzeichnet, dass**
das Identifikationselement (6) und die Positionserfassungseinrichtung (8) untrennbar an dem Formatteil 4 angeordnet sind.

8. Vorrichtung (1) nach wenigstens einem der vorangegangenen Ansprüche,
**dadurch gekennzeichnet, dass**
die Positionserfassungseinrichtung (8) derart gestaltet ist, dass es einen Verriegelungszustand des Formatteils (4) gegenüber der Vorrichtung (1) bestimmt.

9. Vorrichtung (1) nach wenigstens einem der vorangegangenen Ansprüche,
**dadurch gekennzeichnet, dass**
das erste Identifikationselement (6) eine Speichereinrichtung zum Speichern von das Identifikationselement (6) identifizierenden Signalen oder hieraus abgeleiteten Daten aufweist.

10. Formatteil (4), zur trennbaren Anbringung an einer Vorrichtung nach wenigstens einem der vorangegangenen Ansprüche, wobei das Formatteil (4) ein auf RFID - Technologie basierendes erstes Identifikationselement (6) zum Identifizieren des Formatteils (4) aufweist, und wobei das Identifikationselement (6) eine Sendeeinrichtung zum drahtlosen Senden einer das Identifikationselement (6) eindeutig identifizierenden Information aufweist,
**dadurch gekennzeichnet, dass** das Formatteil (1) weiterhin eine Positionserfassungseinrichtung (8) aufweist, welche eine örtliche Position wenigstens eines Elements der Vorrichtung (1) gegenüber dem Formatteil 4 erfasst und ein für diese Position charakteristisches Signal ausgibt.

## Claims

1. An apparatus (1) for the treatment of beverage containers, with a conveying device (2) which conveys the containers along a pre-set conveying path, with a size part (4) which is arranged in an interchangeable manner on the apparatus (1), wherein the size part (4) has a first identification element (6) based upon RFID technology in order to identify the size part (4), **characterized in that** the size part (4) further has a position detection device (8) which detects a local position of at least one element (18) of the apparatus (1) with respect to the size part and emits a signal characteristic of this position.

2. An apparatus (1) according to claim 1, **characterized in that** the apparatus (1) has an interrogation device (20) in order to interrogate the information stored in the first identification element (6).

3. An apparatus (1) according to claim 1, **characterized in that** the apparatus has a fastening device (14) for fastening the size part to the apparatus, and the element (18) is a locking element (18) of the fastening device (14).

4. An apparatus (1) according to at least one of the preceding claims, **characterized in that** the identification element (6) is connected inseparably to the position detection device (8).

5. An apparatus (1) according to at least one of the preceding claims, **characterized in that** the identification element (6) has a transmission device for the wireless emission of signals.

6. An apparatus (1) according to at least one of the preceding claims, **characterized in that** the identification element (6) and the position detection device 8 are arranged on a common carrier (12).

7. An apparatus (1) according to at least one of the preceding claims, **characterized in that** the identification element (6) and the position detection device (8) are arranged inseparably on the size part 4.

8. An apparatus (1) according to at least one of the preceding claims, **characterized in that** the position detection device (8) is designed in such a way that it determines a locking state of the size part (4) with respect to the apparatus (1).

9. An apparatus (1) according to at least one of the preceding claims, **characterized in that** the first identification element (6) has a memory device for storing signals identifying the identification element (6) or data derived therefrom.

10. A size part (4) for separable application on an apparatus according to at least one of the preceding claims, wherein the size part (4) has a first identification element (6) based on RFID technology for the identification of the size part (4), and wherein the identification element (6) has a transmission device for the wireless transmission of a piece of information clearly identifying the identification element (6), **characterized in that** the size part (1) further has a position detection device (8) which detects a local position of at least one element of the apparatus (1) with respect to the size part 4 and emits a signal characteristic of this position.

## Revendications

1. Installation (1) pour le traitement de récipients à boissons, avec un dispositif de transport (2) convoyant les récipients le long d'un chemin de transport prédéfini, avec un gabarit (4) monté de manière à pouvoir être changé sur l'installation (1), le gabarit (4) comportant un premier élément d'identification (6) basé sur la technologie RFID pour l'identification du gabarit (4),
**caractérisée en ce que**
le gabarit (4) comporte en outre un dispositif de détection de position (8) qui détecte une position locale d'au moins un élément (18) de l'installation (1) par rapport au gabarit et émet un signal caractéristique pour cette position.

2. Installation (1) selon la revendication 1,
**caractérisée en ce que**
l'installation (1) comporte un dispositif de demande (20) pour appeler les informations stockées dans le premier élément d'identification (6).

3. Installation (1) selon la revendication 1,
**caractérisée en ce que**
l'installation comporte un dispositif de fixation (14) pour fixer le gabarit sur l'installation, et **en ce que** l'élément (18) est un élément de verrouillage (18) du dispositif de fixation (14).

4. Installation (1) selon au moins une des revendications précédentes,
**caractérisée en ce que**
l'élément d'identification (6) est raccordé de manière inséparable au dispositif de détection de position (8).

5. Installation (1) selon au moins une des revendications précédentes,
**caractérisée en ce que**
l'élément d'identification (6) comporte un dispositif émetteur pour la diffusion sans fil de signaux.

6. Installation (1) selon au moins une des revendications précédentes,
**caractérisée en ce que**
l'élément d'identification (6) et le dispositif de détection de position (8) sont disposés sur un support (12) commun.

7. Installation (1) selon au moins une des revendications précédentes,
**caractérisée en ce que**
l'élément d'identification (6) et le dispositif de détection de position (8) sont disposés de manière inséparable sur le gabarit (4).

8. Installation (1) selon au moins une des revendications précédentes,
**caractérisée en ce que**
le dispositif de détection de position (8) est configuré de manière à déterminer un état de verrouillage du gabarit (4) par rapport à l'installation (1).

9. Installation (1) selon au moins une des revendications précédentes,
**caractérisée en ce que**
le premier élément d'identification (6) comporte un dispositif de mémorisation pour mémoriser les signaux identifiant l'élément d'identification (6) ou des données dérivées de ceux-ci.

10. Gabarit (4) destiné à être monté de manière séparable sur une installation selon au moins une des revendications précédentes, le gabarit (4) comportant un premier élément d'identification (6) basé sur la technologie RFID pour l'identification du gabarit (4), et l'élément d'identification (6) comportant un dispositif émetteur pour la diffusion sans fil d'informations identifiant l'élément d'identification (6) de manière univoque,
**caractérisé en ce que** le gabarit (1) comporte en outre un dispositif de détection de position (8) détectant une position locale d'au moins un élément de l'installation (1) par rapport au gabarit (4) et émettant un signal caractéristique pour cette position.
